# EUROPEAN PATENT SPECIFICATION

(11) **EP 0 962 482 B1**
(45) Date of publication and mention of the grant of the patent: **02.10.2002**
(21) Application number: 99110484.5
(22) Date of filing: 31.05.1999
(51) Int. Cl.: C08G 77/50, C07F 7/08

(54) **Carbosiloxane dendrimers**
Carbosiloxan-Dendrimere
Dendrimères de carbosiloxane

(30) Priority: 29.05.1998 JP 16642398
(43) Date of publication of application: 08.12.1999
(73) Proprietor: Dow Corning Toray Silicone Company, Ltd., Chiyoda-ku, Tokyo 100-0005 (JP)
(72) Inventor: Yoshitake, Makoto, Dow Corning Toray Silicone Co., Ichihara-shi, Chiba Prefecture (JP); Onodera, Satoshi, Dow Corning Toray Silicone Co., Ichihara-shi, Chiba Prefecture (JP)
(74) Representative: Sternagel, Fleischer, Godemeyer & Partner Patentanwälte

(56) References cited:
- EP-A2- 0 743 313
- EP-A2- 0 866 086
- Database WPI on EPOQUE, week 9513, London: Derwent Publications Ltd., AN 95-093846, Class A23, XP002900593; & JP 07-017981 A (SHINETSU CHEM. IND. CO. LTD.),

## Description

This invention relates to a novel carbosiloxane dendrimer that has a highly branched structure in which the siloxane bond and silalkylene bond alternate, that contains silicon-bonded hydrogen and/or silicon-bonded-alkoxy, that can also be prepared in a high-molecular-weight form, and that exhibits a narrow molecular weight distribution, to a process for its production and to its use as crosslinker in curable compositions.

Dendrimers are polymers with a narrow molecular weight distribution that have a highly branched structure which elaborates radially from a single core. Dendrimers are characterized by a low viscosity, high reactivity, high solubility, and low glass-transition temperature and as a consequence their applications have been the subject of study. The following are examples of the already known organosilicon dendrimers: siloxane dendrimers (refer to Rebrov et al., *Dokl. Acad. Nauk. SSSR*, 309, 367 (1989) and Masamune et al., *J. Am. Chem. Soc*., 112, 7077 (1990)), carbosiloxane dendrimers (refer to Kakimoto et al., *Macromolecules*, 24, 3469 (1991); Japanese Published Patent Application (Kokoku or Examined) Number Hei 7-17981 (17,981/1995); and Sheiko et al., *Macromol. Rapid Commun*., 17, 283 (1996)), and carbosilane dendrimers (refer to Roovers et al., *Macromolecules*, 26, 963 (1993) and Japanese Published Patent Application (Kokoku or Examined) Number Hei 8-311205 (311,205/1996)). This literature also discloses carbosiloxane dendrimers in which the siloxane bond and silalkylene bond occur in alternation (refer to Japanese Published Patent Application (Kokoku or Examined) Number Hei 7-17981 and Sheiko et al., *Macromol. Rapid Commun*., 17, 283 (1996)). However, the carbosiloxane dendrimers disclosed therein are limited to dendrimers in which the starting reagent that forms the dendrimer core is a silane compound bearing a plural number of vinyl or allyl groups bonded to a single silicon atom, and the methods disclosed therein can only produce low-molecular-weight dendrimer at a low number of generations. The synthesis by a one-step polymerization method of highly branched polymer in which the siloxane bond and silalkylene bond alternate has also been disclosed (refer to Mathias et al., *J. Am. Chem. Soc*., 113, 4043 (1991)), but this method cannot produce dendrimer with a narrow molecular weight distribution. In sum, then, there has yet to appear carbosiloxane dendrimer that has a highly branched structure in which the siloxane bond and silalkylene bond alternate, that can also be prepared in a high-molecular-weight form, and that exhibits a narrow molecular weight distribution.

Organosilicon polymers containing a plural number of silicon-bonded hydrogen atoms in each molecule are used as crosslinkers in hydrosilylation-based crosslinking reactions and as precursors for the synthesis of functional organosilicon polymers. Desire has recently arisen for the development of novel crosslinkers that can exhibit a high crosslinking efficiency and can generate cured products having excellent properties (e.g., mechanical strength, adhesiveness, and durability) and for the development of novel precursors that would lead to the synthesis of functional organosilicon polymers with unique reactivities. In addition, organosilicon polymers containing a plural number of silicon-bonded alkoxy groups in each molecule are known to be useful as coatings, as starting materials for paint vehicles, and as crosslinkers for moisture-curing compositions. In this case again desire has recently arisen for the development of highly reactive organosilicon polymers that would be useful for improving end-product performance, such as mechanical strength, adhesiveness, and durability. The functional groups bonded at the branch terminals of a dendrimer as a general rule are highly reactive, and in addition a narrow molecular weight distribution can be expected to generate a uniform reactivity. Accordingly, dendrimer bearing the aforementioned reactive groups at its branch terminals would be well-suited for satisfying the desires alluded to above.

The present inventors developed the present invention as a result of extensive investigations directed to solving the problems described above. In specific terms, the object of the present invention is to provide a novel carbosiloxane dendrimer that has a highly branched structure in which the siloxane bond and silalkylene bond alternate and that contains silicon-bonded hydrogen and/or silicon-bonded alkoxy.

### SUMMARY OF THE INVENTION

The present invention relates to a carbosiloxane dendrimer that contains at least one siloxane unit with the general formula

X¹R¹ ₐSiO_{(3-a)/2}

where R¹ is C₁ to C₁₀ alkyl or aryl, a is an integer from 0 to 2, and X¹ is the silylalkyl group with the following formula at i = 1 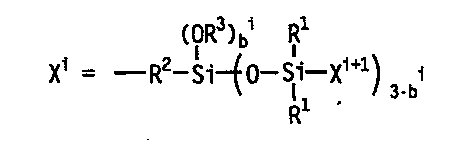 where R¹ is C₁ to C₁₀ alkyl or aryl, R² is C₂ to C₁₀ alkylene, R³ is C₁ to C₁₀ alkyl, X^{i + 1} is the hydrogen atom or the above-defined silylalkyl group at i = i + 1, i is an integer with a value from 1 to 10 that specifies the generation of said silylalkyl group, and b¹ is an integer from 0 to 3 with the proviso that b¹ in at least one X¹ in each molecule is an integer from 0 to 2
wherein when more than 1 siloxane unit is present the subject siloxane units may be the same or different. Preferably the carbosiloxane dendrimer comprises a polysiloxane structure that contains at least 2 silicon atoms as a core and at least one of the aforesaid siloxane units.

### DETAILED DESCRIPTION OF THE INVENTION

The carbosiloxane dendrimer according to the present invention characteristically has a polysiloxane structure that contains at least one siloxane unit with the general formula X¹R¹ₐSiO_{(3-a)/2} wherein when more than 1 siloxane unit is present the subject siloxane units may be the same or different. R¹ in this general formula is C₁ to C₁₀ alkyl or aryl. The alkyl encompassed by R¹ can be exemplified by methyl, ethyl, propyl, butyl, pentyl, isopropyl, isobutyl, cyclopentyl, and cyclohexyl, while the aryl encompassed by R¹ can be exemplified by phenyl and naphthyl. Methyl is preferred among the preceding. The subscript a is an integer with a value from 0 to 2. X¹ is the silylalkyl group with the following formula at i = 1 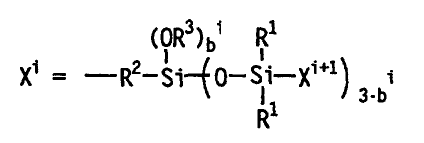 R¹ in this general formula is defined as above. R² in the preceding general formula is C₂ to C₁₀ alkylene, for example, straight-chain alkylene such as ethylene, propylene, butylene, and hexylene and branched alkylene such as methylmethylene, methylethylene, 1-methylpentylene, and 1,4-dimethylbutylene. Ethylene, methylmethylene, hexylene, 1-methylpentylene, and 1,4-dimethylbutylene are preferred for R². R³ is C₁ to C₁₀ alkyl, for example, methyl, ethyl, propyl, butyl, pentyl, and isopropyl, among which methyl and ethyl are preferred. X^{i + 1} is the hydrogen atom or the above-defined silylalkyl group. i is an integer from 1 to 10 that indicates the number of generations of the silylalkyl group under consideration, i.e., it indicates the number of repetitions of this silylalkyl group. Thus, this silylalkyl group has the following general formula when the number of generations is 1: 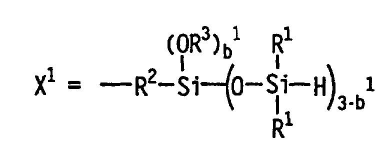 the following general formula when the number of generations is 2: 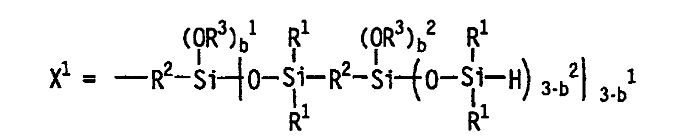 and has the following general formula when the number of generations is 3.

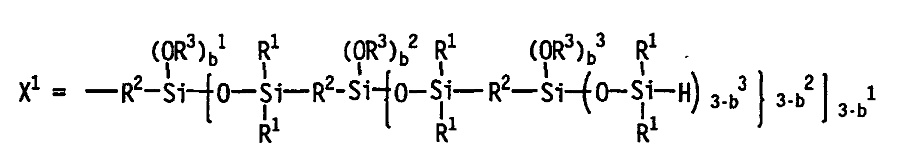

The carbosiloxane dendrimer according to the present invention must contain at least 1 siloxane unit as represented by the general formula X¹R¹ₐSiO_{(3-a)/2} wherein when more than 1 siloxane unit is present the subject siloxane units may be the same or different and in apreferred embodiment comprises a polysiloxane structure having at least 2 silicon atoms forming the core of said carbosiloxane dendrimer. The structural units in this organosiloxane comprise monofunctional siloxane units (M units) with the general formulas X¹R¹₂SiO_{1/2} and R¹₃SiO_{1/2}, difunctional siloxane units (D units) with the general formulas X¹R¹SiO_{2/2} and R¹₂SiO_{2/2}, trifunctional siloxane units (T units) with the general formulas X¹SiO_{3/2} and R¹SiO_{3/2}, and the tetrafunctional siloxane unit (Q unit) SiO_{4/2}. The following are preferred embodiments of this organopolysiloxane: organopolysiloxane that contains at least one difunctional siloxane unit with the general formula R¹₂SiO_{2/2} or X¹R¹SiO_{2/2} (R¹ and X¹ are defined as above); organopolysiloxane that contains at least 5 silicon atoms and is composed of siloxane units selected from the general formulas R¹SiO_{3/2}, X¹SiO_{3/2}, R¹₃SiO_{1/2}, and X¹R¹₂SiO_{1/2} (R¹ and X¹ are defined as above); and organopolysiloxane that contains at least 6 silicon atoms and is composed of siloxane units selected from the general formulas SiO_{4/2}, R¹₃SiO_{1/2}, and X¹R¹₂SiO_{1/2} (R¹ and X¹ are defined as above). The subject carbosiloxane dendrimers can be more specifically exemplified by the following general formulas, in which X¹ and R¹ are defined as above and m, n, x, y, z, p, q, r, s, and t, which denote the number of siloxane units present in each molecule, have values ≥ 1 wherein p + q ≥ 5 and s + t ≥ 6.

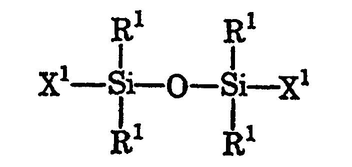

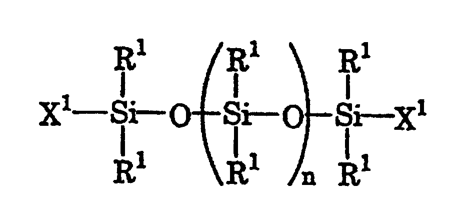

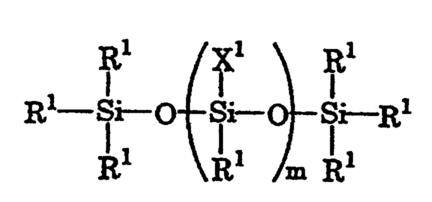

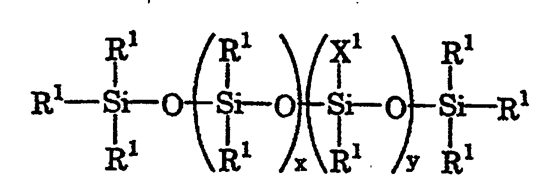

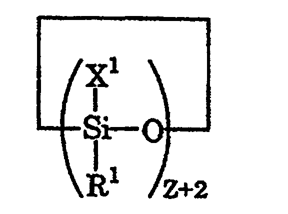

(X¹R¹ ₂SiO_{1/2})ₚ(R¹SiO_{3/2})_{q}

(X¹SiO_{3/2})ᵣ

(X¹R¹ ₂SiO_{1/2})ₛ(SiO_{4/2})ₜ

The carbosiloxane dendrimer according to the present invention can be prepared as a single compound or a mixture of compounds. The dispersity index of the molecular weight (polystyrene basis), that is, weight-average molecular weight/number-average molecular weight (M_{w}/Mₙ), is preferably ≤ 2. The subject carbosiloxane dendrimer can be specifically exemplified by polymers with the following average molecular formulas.

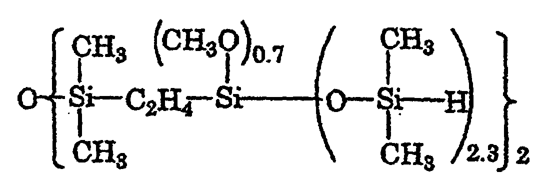

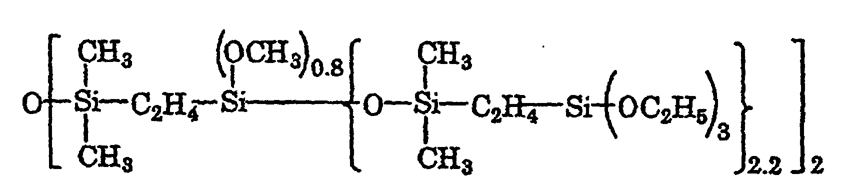

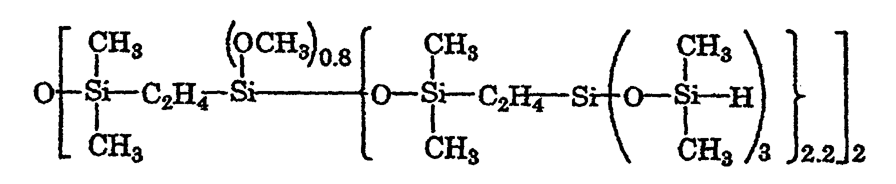

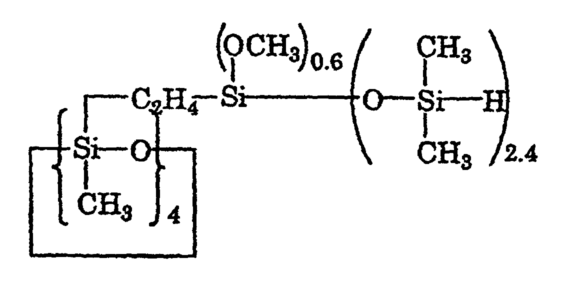

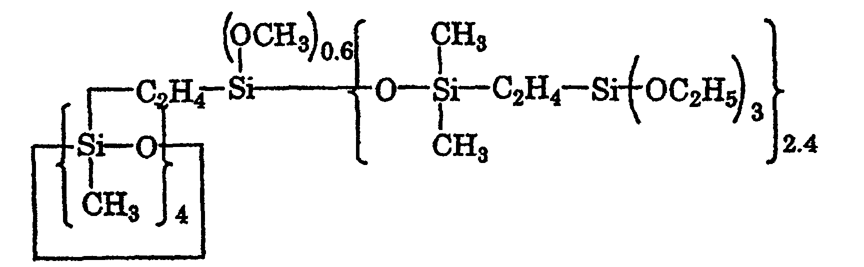

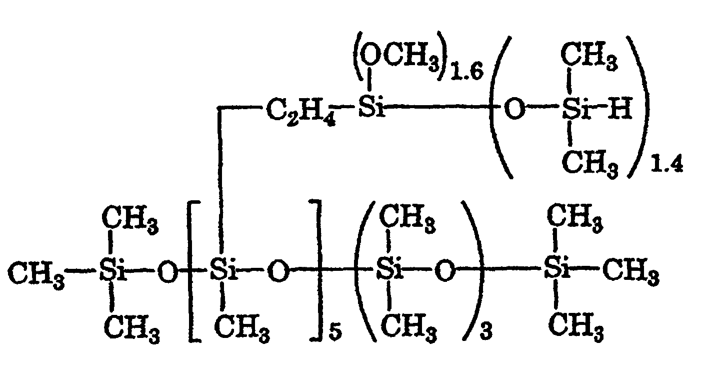

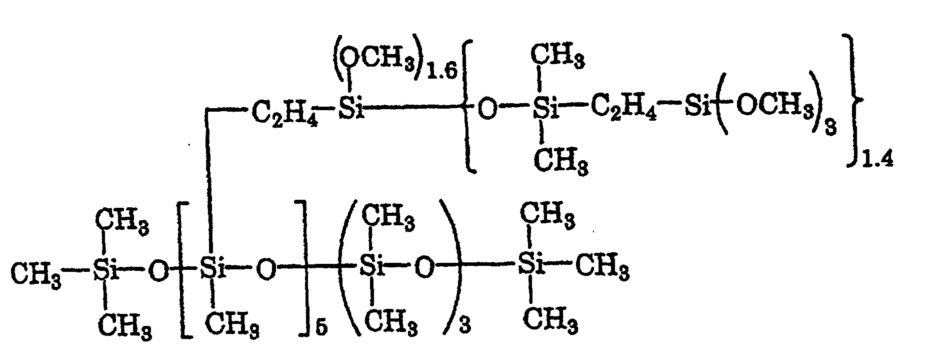

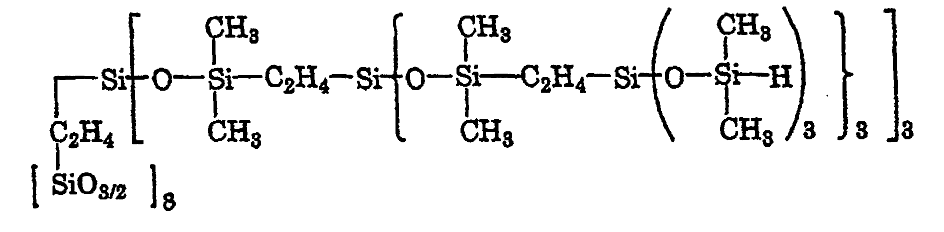

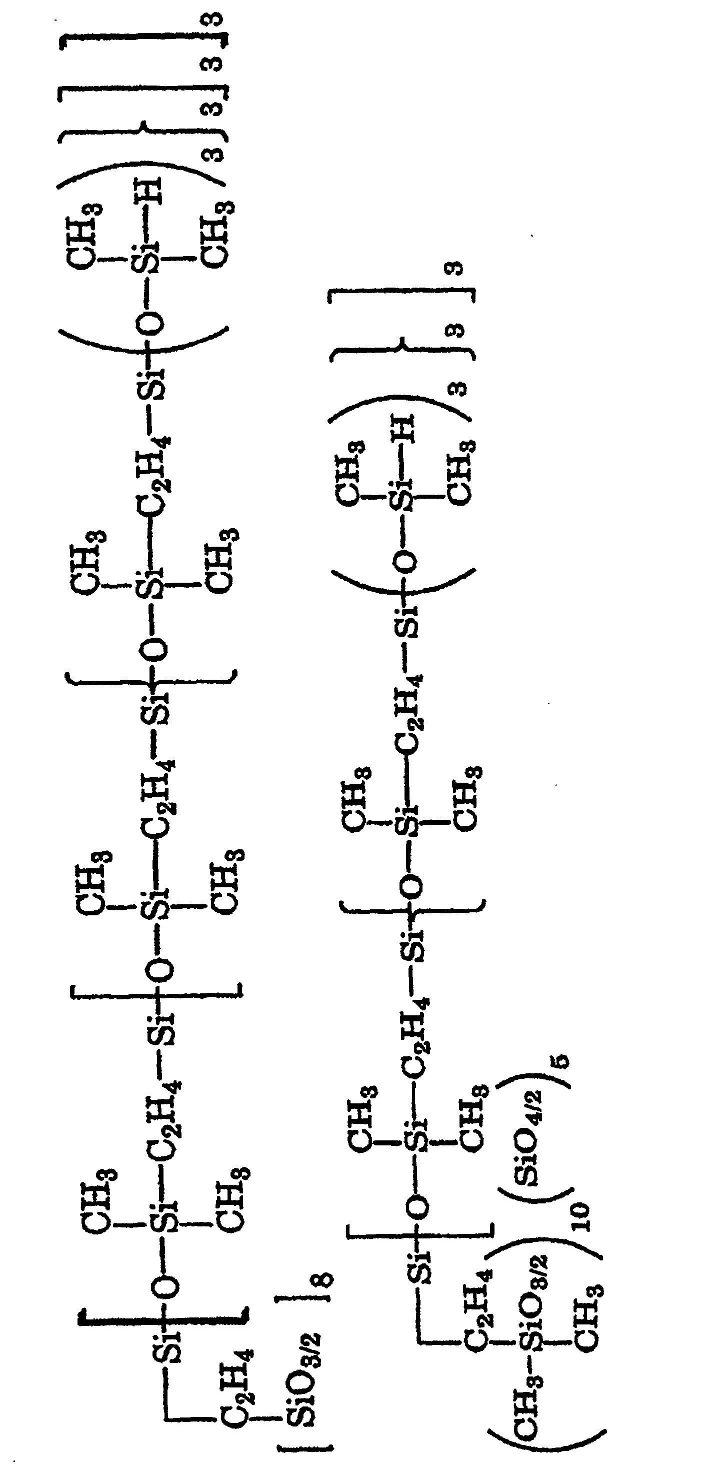

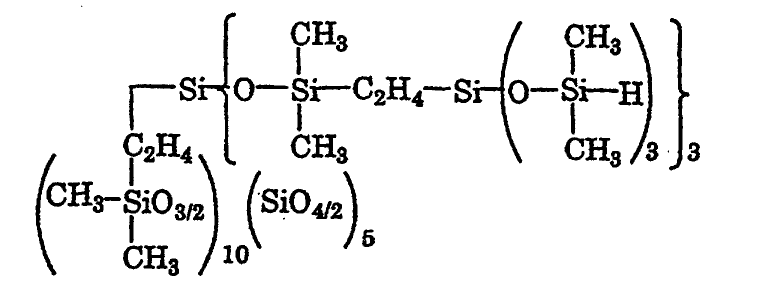

The carbosiloxane dendrimer according to the present invention can be synthesized by executing the following processes (x) and (y) in alternation and at least once each using as starting material an SiH-functional polysiloxane that contains at least 2 silicon atoms and at least one siloxane unit with the general formula HR¹ₐSiO_{(3-a)/2} (R¹ is C₁ to C₁₀ alkyl or aryl and a is an integer from 0 to 2) wherein when more than 1 is present the specified siloxane units may be the same or different.

### Process (x)

In this process, the aforementioned starting material - or the SiH-functional carbosiloxane dendrimer afforded by the following process (y) - is addition-reacted with alkenyl-functional alkoxysilane with the general formula R⁴Si(OR³)₃ (R³ is defined as above and R⁴ is C₂ to C₁₀ alkenyl) in the presence of a platinum transition metal catalyst.

### Process (y)

In this process, the alkoxy-functional carbosiloxane dendrimer afforded by process (x) is reacted with disiloxane with the general formula 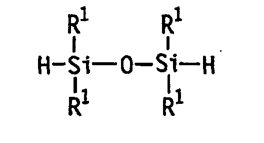 (R¹ is defined as above)
under acidic conditions.

Carbosiloxane dendrimer whose branch terminals are endblocked by alkoxy is obtained when the last step in this preparative method is process (x). Carbosiloxane dendrimer whose branch terminals are endblocked by SiH is obtained when the last step in this preparative method is process (y).

The platinum transition metal catalyst used in process (x) can be exemplified by chloroplatinic acid, alcohol-modified chloroplatinic acid, platinum-olefin complexes, and platinum-diketonate complexes. The platinum transition metal-catalyzed addition reaction is preferably run using a slight excess of the alkenyl-functional alkoxysilane in order to completely react the silicon-bonded hydrogen present in the starting material. After the reaction, the excess alkenyl-functional alkoxysilane can be fractionated off and recovered by, for example, distillation under reduced pressure. This addition reaction can be run at ambient temperature or with heating and can be run in a solvent that does not inhibit the reaction.

The acid used to produce the acidic condition in process (y) is preferably hydrochloric acid, sulfuric acid, a carboxylic acid, or a sulfonic acid, or a mixture of the preceding. In addition, the silicon-bonded hydrogen is alcoholyzed in process (y) and as a result small amounts of the following monoalkoxysiloxy group may also be present. 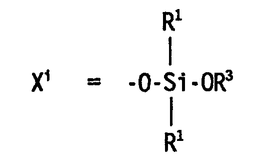 (R¹ and R³ are defined as above)

The hereinabove described carbosiloxane dendrimer according to the present invention has the following characteristic features: it has a highly branched structure in which the siloxane bond and the silalkylene bond occur in alternation; it contains silicon-bonded hydrogen and/or silicon-bonded alkoxy; it can also be prepared in a high-molecular-weight form; and it exhibits a narrow molecular weight distribution. Thus, when this carbosiloxane dendrimer contains silicon-bonded hydrogen, it will be useful as a crosslinker for hydrosilylation reaction-curing compositions. When, on the other hand, it contains silicon-bonded alkoxy, it will be useful as a coating, as a starting material for paint vehicles, and as a crosslinker for moisture-curable compositions.

### BRIEF DESCRIPTION OF THE DRAWINGS

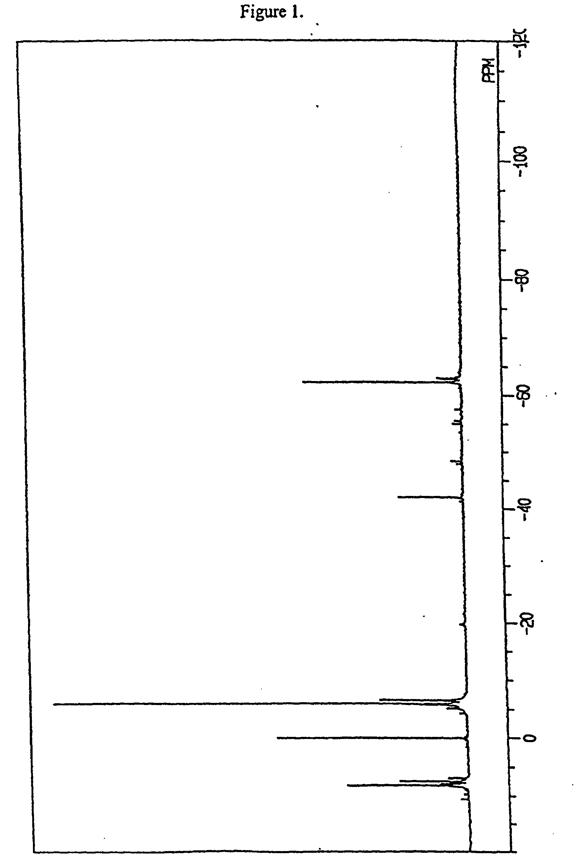

Figure 1 contains the ²⁹Si-nuclear magnetic resonance spectrum of the carbosiloxane dendrimer synthesized in Example 1.

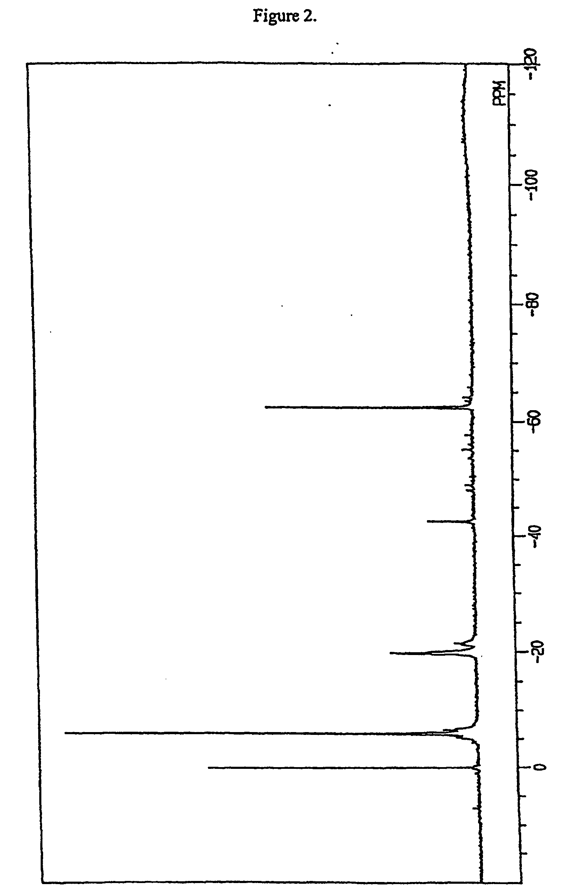

Figure 2 contains the ²⁹Si-nuclear magnetic resonance spectrum of the branched carbosiloxane dendrimer synthesized in Example 2.

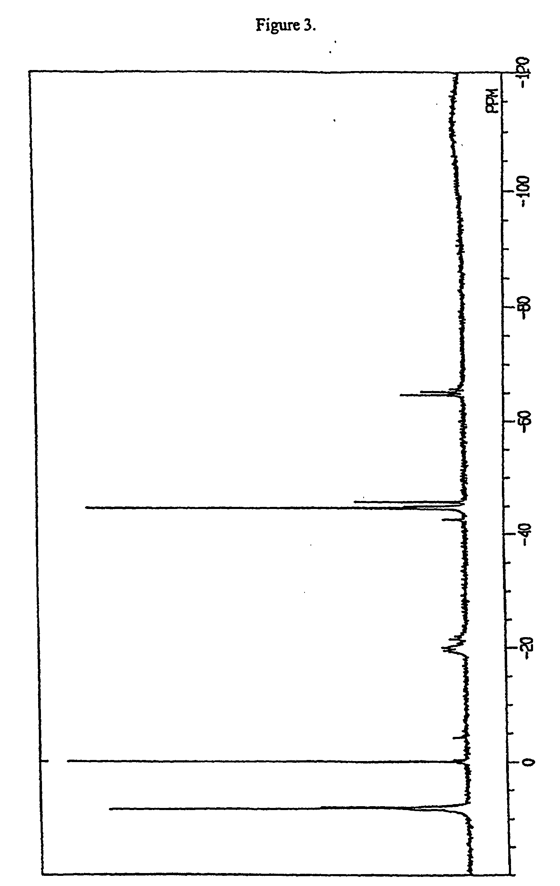

Figure 3 contains the ²⁹Si-nuclear magnetic resonance spectrum of the carbosiloxane dendrimer synthesized in Example 3.

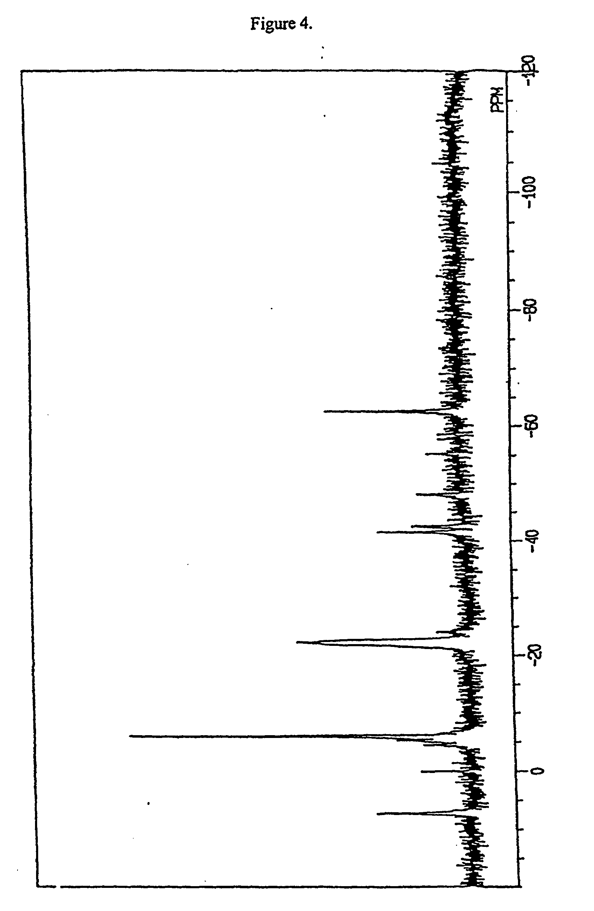

Figure 4 contains the ²⁹Si-nuclear magnetic resonance spectrum of the carbosiloxane dendrimer synthesized in Example 4.

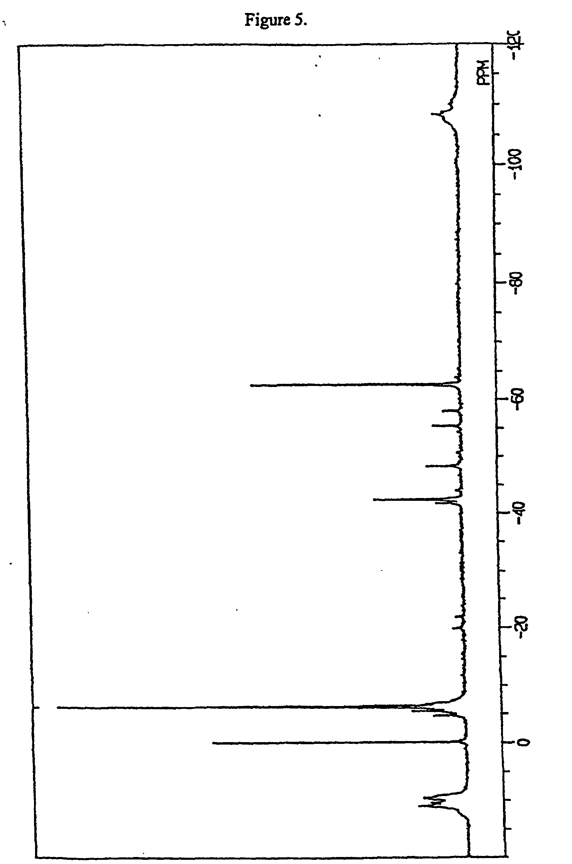

Figure 5 contains the ²⁹Si-nuclear magnetic resonance spectrum of the carbosiloxane dendrimer synthesized in Example 5.

### EXAMPLES

The invention will be explained in greater detail below using working examples, in which the carbosiloxane dendrimer according to the present invention was identified by ²⁹Si-nuclear magnetic resonance analysis and gel permeation chromatographic analysis (solvent: toluene).

### Example 1

121 g vinyltrimethoxysilane and 0.04 g 3% isopropanolic chloroplatinic acid solution were introduced into a 200-mL four-neck flask equipped with a stirrer, thermometer, reflux condenser, and an addition funnel and then heated to 105°C while stirring. To this was then gradually added 50 g 1,1,3,3-tetramethyldisiloxane dropwise from the addition funnel so as to maintain the reaction temperature at 100 to 110°C. After completion of the addition, the reaction solution was heated for an additional 1 hour at 115°C. After cooling, the reaction solution was concentrated under reduced pressure to give 158 g of a very light brown liquid. 180 g 1,1,3,3,-tetramethyldisiloxane, 50 mL concentrated hydrochloric acid, 100 mL water, and 100 mL isopropanol were subsequently placed in a 1-liter four-neck flask equipped with a stirrer, thermometer, reflux condenser, and an addition funnel and were stirred. The 158 g of the very light brown liquid prepared as described above was then gradually added dropwise from the addition funnel over 1 hour. After the completion of addition, the reaction solution was stirred at room temperature for an additional 1 hour. The reaction solution was then transferred to a separatory funnel, the lower layer was separated off, and the remaining upper layer solution was washed 3 times with 100 mL water, then once with 100 mL saturated aqueous sodium bicarbonate solution, and finally dried over anhydrous calcium chloride. The solids were filtered off and the resulting solution was concentrated under reduced pressure to yield 233 g of a colorless and transparent liquid. Analysis of this reaction product by ²⁹Si-nuclear magnetic resonance analysis confirmed it to be carbosiloxane dendrimer with the average molecular formula given below having an average of 4.6 silicon-bonded hydrogen atoms and an average of 1.4 silicon-bonded methoxy groups in each molecule. Using gel permeation chromatography, this carbosiloxane dendrimer was found to have a number-average molecular weight of 1,039 (polystyrene basis) and a dispersity index of 1.08.

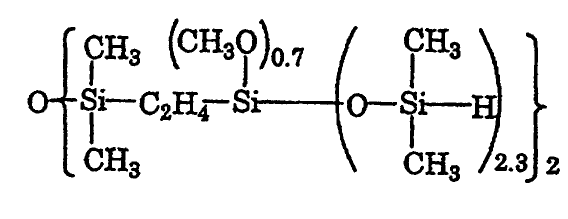

### Example 2

88.9 g vinyltrimethoxysilane and 0.04 g 3% isopropanolic chloroplatinic acid solution were introduced into a 200-mL four-neck flask equipped with a stirrer, thermometer, reflux condenser, and an addition funnel and then heated to 100°C while stirring. To this was then gradually added 30.0 g 1,3,5,7-tetramethylcyclotetrasiloxane dropwise from the addition funnel so as to maintain the reaction temperature at 100 to 110°C. After completion of the addition, the reaction solution was heated for an additional 1 hour at 120°C. After cooling, the reaction solution was concentrated under reduced pressure to give 100.4 g of a very light brown liquid. 93.0 g 1,1,3,3,-tetramethyldisiloxane, 30 mL concentrated hydrochloric acid, 60 mL water, and 60 mL isopropanol were subsequently placed in a 1-liter four-neck flask equipped with a stirrer, thermometer, reflux condenser, and an addition funnel and were stirred. 80.0 g of the very light brown liquid prepared as described above was then gradually added dropwise from the addition funnel over 1 hour. After the completion of addition, the reaction solution was stirred at room temperature for an additional 1 hour. The reaction solution was then transferred to a separatory funnel, the lower layer was separated off, and the remaining upper layer solution was washed twice with 100 mL water, then once with 100 mL saturated aqueous sodium bicarbonate solution, and finally dried over anhydrous sodium sulfate. The solids were filtered off and the resulting solution was concentrated under reduced pressure to yield 98.5 g of a colorless and transparent liquid. Analysis of this reaction product by ²⁹Si-nuclear magnetic resonance analysis confirmed it to be carbosiloxane dendrimer with the average molecular formula given below having an average of 9.6 silicon-bonded hydrogen atoms and an average of 2.4 silicon-bonded methoxy groups in each molecule. Using gel permeation chromatography, this carbosiloxane dendrimer was found to have a number-average molecular weight of 1,819 (polystyrene basis) and a dispersity index of 1.15.

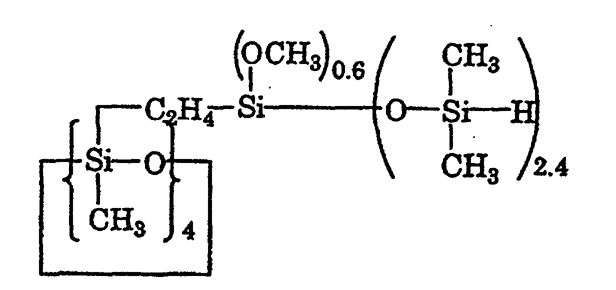

### Example 3

54.3 g vinyltriethoxysilane and 0.04 g 3% isopropanolic chloroplatinic acid solution were introduced into a 100-mL three-neck flask equipped with a stirrer, thermometer, reflux condenser, and an addition funnel and then heated to 100°C while stirring. 27.0 g of the carbosiloxane dendrimer synthesized in Example 2 was then gradually added dropwise from the addition funnel so as to maintain the reaction temperature at 100 to 110°C. After completion of the addition, the reaction solution was heated for an additional 1 hour at 120°C. After cooling, the reaction solution was concentrated under reduced pressure to give 61.9 g of a very light brown liquid. Analysis of this reaction product by ²⁹Si-nuclear magnetic resonance analysis confirmed it to be carbosiloxane dendrimer with the average molecular formula given below having an average of 29 silicon-bonded ethoxy groups and an average of 2.4 silicon-bonded methoxy groups in each molecule. Using gel permeation chromatography, this carbosiloxane dendrimer was found to have a number-average molecular weight of 3,690 (polystyrene basis) and a dispersity index of 1.17.

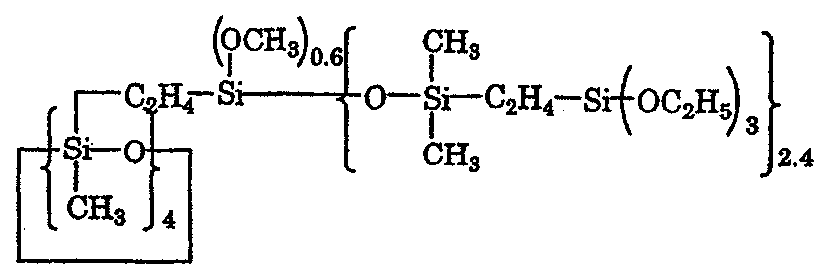

### Example 4

49.4 g vinyltrimethoxysilane and 0.04 g 3% isopropanolic chloroplatinic acid solution were introduced into a 100-mL three-neck flask equipped with a stirrer, thermometer, reflux condenser, and an addition funnel and then heated to 100°C while stirring. 30.0 g polysiloxane with the following average formula 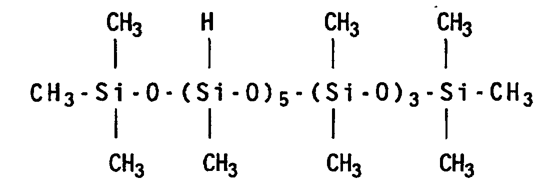 was then gradually added dropwise from the addition funnel so as to maintain the reaction temperature at 100 to 110°C. After completion of the addition, the reaction solution was heated for an additional 1 hour at 120°C. After cooling, the reaction solution was transferred to a pear-shaped evaporating flask and concentrated under reduced pressure on a rotary evaporator to give 61.0 g of a very light brown liquid 103.3 g 1,1,3,3,-tetramethyldisiloxane, 40 mL concentrated hydrochloric acid, 20 mL water, and 20 mL isopropanol were subsequently placed in a 300-mL four-neck flask equipped with a stirrer, thermometer, reflux condenser, and an addition funnel and were stirred. The 61.0 g of the very light brown liquid prepared as described above was then gradually added dropwise from the addition funnel over 1 hour. After the completion of addition, the reaction solution was stirred at room temperature for an additional 1 hour. The reaction solution was then transferred to a separatory funnel, the lower layer was separated off, and the remaining upper layer solution was washed twice with 100 mL water, then once with 100 mL saturated aqueous sodium bicarbonate solution, and finally dried over anhydrous magnesium sulfate. The solids were filtered off and the resulting solution was concentrated under reduced pressure to yield 73.3 g of a colorless and transparent liquid. Analysis of this reaction product by ²⁹Si-nuclear magnetic resonance analysis confirmed it to be carbosiloxane dendrimer with the average molecular formula given below having an average of 7 silicon-bonded hydrogen atoms and an average of 7 silicon-bonded methoxy groups in each molecule. Using gel permeation chromatography, this carbosiloxane dendrimer was found to have a number-average molecular weight of 2,547 (polystyrene basis) and a dispersity index of 1.71.

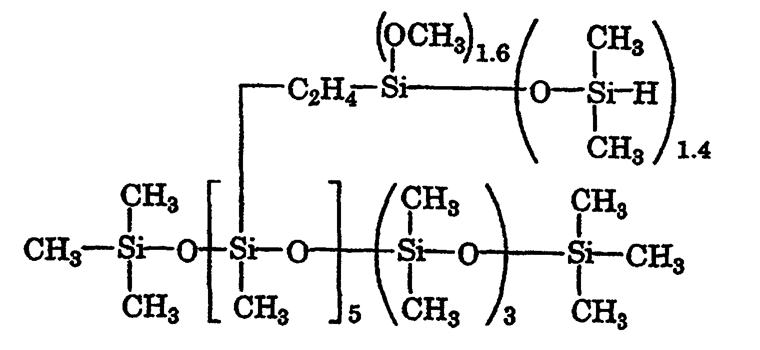

### Example 5

160 g vinyltrimethoxysilane and 0.10 g 3% isopropanolic chloroplatinic acid solution were introduced into a 500-mL four-neck flask equipped with a stirrer, thermometer, reflux condenser, and an addition funnel and then heated at 100°C while stirring. 100 g polysiloxane with the average compositional formula {H(CH₃)₂SiO_{1/2}}₁₀(SiO_{4/2})₅ was then gradually added dropwise from the addition funnel so as to maintain the reaction temperature at 100 to 110°C. After completion of the addition, the reaction solution was heated for an additional 1 hour at 120°C. After cooling, the reaction solution was concentrated under reduced pressure to give 231 g of a very light brown liquid. 193 g 1,1,3,3,-tetramethyldisiloxane, 86 g acetic acid, and 0.24 g trifluoromethanesulfonic acid were subsequently placed in a 2-L four-neck flask equipped with a stirrer, thermometer, reflux condenser, and an addition funnel and were heated to 50°C with stirring. 207 g of the very light brown liquid prepared as described above was then gradually added dropwise from the addition funnel over 1 hour. After the completion of addition, the reaction solution was stirred at 50°C for an additional 1 hour. The reaction solution was subsequently transferred to a separatory funnel, washed twice with 200 mL water, then once with 100 mL saturated aqueous sodium bicarbonate solution, and finally dried over anhydrous magnesium sulfate. The produced solids were filtered off and the resulting solution was concentrated under reduced pressure to yield 308 g of a colorless and transparent liquid. Then, 59.3 g vinyltrimethoxysilane and 0.05 g 3% isopropanolic chloroplatinic acid solution were introduced into a 300-mL four-neck flask equipped with a stirrer, thermometer, reflux condenser, and an addition funnel and heated to 100°C while stirring. 57.6 g of the colorless, transparent liquid obtained as described above was gradually added dropwise from the addition funnel so as to maintain the reaction temperature at 100 to 110°C. After completion of the addition, the reaction solution was heated for an additional 1 hour at 120°C. After cooling, the reaction solution was concentrated under reduced pressure to give 109 g of a very light brown liquid. Finally, 80.4 g 1,1,3,3,-tetramethyldisiloxane, 36.0 g acetic acid, and 0.11 g trifluoromethanesulfonic acid were placed in a 2-L four-neck flask equipped with a stirrer, thermometer, reflux condenser, and an addition funnel and were heated to 50°C with stirring. 103 g of the very light brown liquid obtained as described above was then gradually added dropwise from the addition funnel over 1 hour. After the completion of addition, the reaction solution was stirred at 50°C for an additional 1 hour. The reaction solution was subsequently transferred to a separatory funnel, washed twice with 200 mL water, then once with 100 mL saturated aqueous sodium bicarbonate solution, and finally dried over anhydrous magnesium sulfate. The produced solids were filtered off and the resulting solution was concentrated under reduced pressure to yield 143 g of a colorless and transparent liquid. Analysis of this reaction product by ²⁹Si-nuclear magnetic resonance analysis confirmed it to be carbosiloxane dendrimer with the average molecular formula given below having an average of 51 silicon-bonded hydrogens in each molecule. Using gel permeation chromatography, this carbosiloxane dendrimer was found to have a number-average molecular weight of 3,381 (polystyrene basis) and a dispersity index of 1.19.

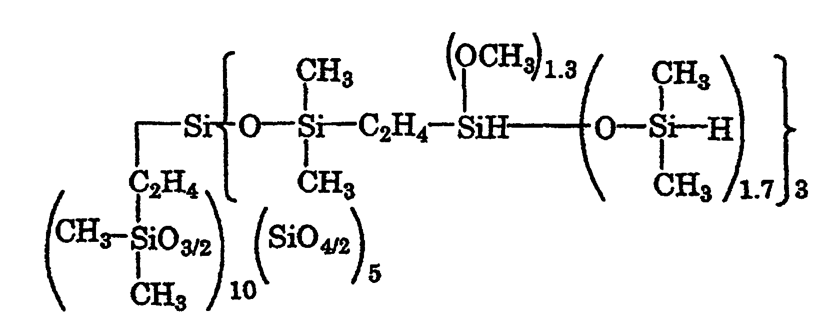

### Application Example 1

100 parts organopolysiloxane (viscosity = 2,100 centistokes) with the formula 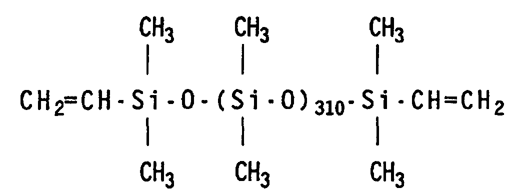 was mixed to homogeneity with 0.49 parts of the SiH-functional carbosiloxane dendrimer prepared in Example 2 with the formula 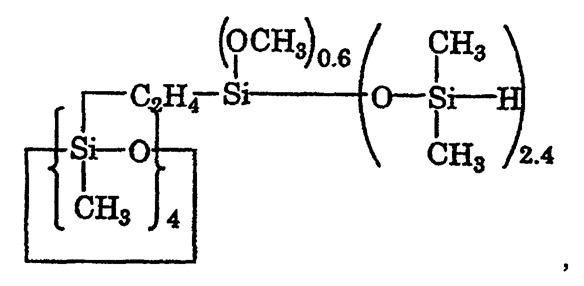 0.1 part of a toluene solution of a platinum/divinyltetramethyldisiloxane complex (platinum concentration = 0.5%), and 0.1 part 3-phenyl-1-butyn-3-ol (reaction inhibitor) to give a curable organopolysiloxane composition having a vinyl group : silicon-bonded hydrogen molar ratio of 1 : 1.3. This organopolysiloxane composition was heated at 90°C in order to measure the cure time. The curing time of the organopolysiloxane composition was measured at the specified temperature using a Curastometer™ Model 3 obtained from Toyo Baldwin Kabushiki Kaisha. The curing time required for the torque applied by the instrument to reach 10% (T₁₀) and 90 % (T₉₀) of its maximum value respectively is given in Table 1. This organopolysiloxane composition was also cured by press molding at 90°C for 20 minutes to give a 2 mm-thick sheet as described in JIS K 6301 which was submitted to measurement of the tensile strength and durometer in accordance with JIS K 6301. The measured values are reported in Table 1.

### Comparative Application Example 1

100 parts organopolysiloxane (viscosity = 2,100 centistokes) with the formula 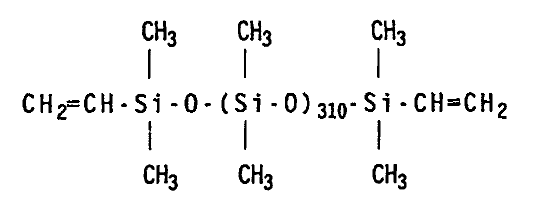 was mixed to homogeneity with 0.84 part SiH-functional methylhydrogenpolysiloxane with the formula 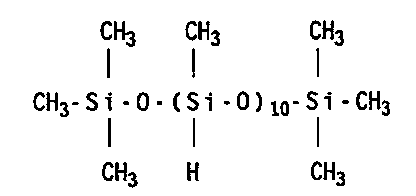 in place of the carbosiloxane dendrimer prepared in Example 2, 0.1 part of a toluene solution of a platinum/divinyltetramethyldisiloxane complex (platinum concentration = 0.5%), and 0.1 part 3-phenyl-1-butyn-3-ol (reaction inhibitor) to give a curable organopolysiloxane composition having a vinyl group : silicon-bonded hydrogen molar ratio of 1 : 1.3. The cure time of the resulting organopolysiloxane composition was measured as in Application Example 1. This organopolysiloxane composition was also press molded by heating at 130°C for 20 minutes to give a 2 mm-thick sheet which was submitted to measurement of the tensile strength and durometer as described in Application example 1. The measured values are reported in Table 1.

**Table 1**

| | Application Example 1 | Comparative Application Example 1 |
|---|---|---|
| cure times at 90°C (min) | | |
| 10% torque increase | 0.5 | 3.2 |
| 90% torque increase | 0.6 | 9.5 |

| physical properties of the cured product | | |
|---|---|---|
| curing temperature (°C) | 90 | 130 |
| tensile strength (kg/cm²) | 8 | 2 |
| durometer | 36 | 22 |

The carbosiloxane dendrimer according to the present invention is characterized by a highly branched structure in which the siloxane bond and silalkylene bond alternate, by the presence of silicon-bonded hydrogen and/or silicon-bonded alkoxy in each molecule, and by an excellent reactivity.

## Claims

1. Carbosiloxane dendrimer that contains at least one siloxane unit with the general formula
X¹R¹ ₐSiO_{(3-a)/2}
R¹ is independently selected from C₁ to C₁₀ alkyl or aryl, a is an integer from 0 to 2, and X¹ is the silylalkyl group with the following formula at i = 1 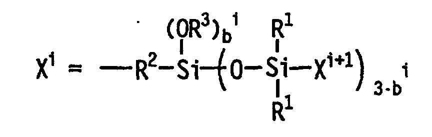 where R¹ is independently selected from C₁ to C₁₀ alkyl or aryl, R² is C₂ to C₁₀ alkylene, R³ is independently selected from C₁ to C₁₀ alkyl, Xⁱ⁺¹ is the hydrogen atom or the above-defined silylalkyl group at i = i + 1, i is an integer with a value from 1 to 10 that specifies the generation of the said silylalkyl group, and bⁱ is an integer from 0 to 3 with the proviso that b¹ in at least one X¹ in each molecule is an integer from 0 to 2
wherein when more than 1 siloxane unit is present the subject siloxane units may be the same or different.

2. The carbosiloxane dendrimer according to claim 1, that has the following general formula 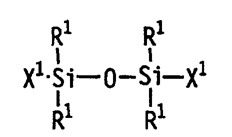 in which R¹ and X¹ are defined as in claim 1.

3. The carbosiloxane dendrimer according to claim 1 comprising a polysiloxane structure containing at least 2 silicon atoms as a core and at least one of said siloxane units.

4. The carbosiloxane dendrimer according to claim 1, that contains at least one difunctional siloxane unit with the general formula R¹₂SiO_{2/2} or X¹R¹SiO_{2/2} whereby R¹ and X¹ are defined as in claim 1 in the polysiloxane structure comprising the core.

5. The carbosiloxane dendrimer according to claim 1, wherein the polysiloxane structure comprising the core contains at least 5 silicon atoms and is composed of siloxane units selected from the general formulas R¹SiO_{3/2}, X¹SiO_{3/2}, R¹₃SiO_{1/2}, and X¹R¹₂SiO_{1/2} whereby R¹ and X¹ are defined as in claim 1.

6. The carbosiloxane dendrimer according to claim 1, wherein the polysiloxane structure comprising the core contains at least 6 silicon atoms and is composed of siloxane units selected from the general formulas SiO_{4/2}, R¹₃SiO_{1/2}, and X¹R¹₂SiO_{1/2} whereby R¹ and X¹ are defined as in claim 1.

7. The carbosiloxane dendrimer according to any of the preceding claims, whose molecular weight, determined on a polystyrene basis, has a dispersity index no greater than 2.

8. A process for preparing carbosiloxane dendrimers comprising:
a) reacting an Si-H-functional polysiloxane that contains at least 2 silicon atoms and at least one siloxane unit with the general formula HR¹ₐSi_{(3-a)/2} whereby said silicon atoms may belong to said siloxane unit(s) or may be separate and R¹ is independently selected from C₁ to C₁₀ alkyl or aryl and a is an integer from 0 to 2 with an alkenyl-functional alkoxy silane with the general formula R⁴Si(OR³)₃, whereby R³ is independently selected from C₁ to C₁₀ alkyl and R⁴ is selected from C₂ to C₁₀ alkenyl in the presence of a platinum containing catalyst;
b) reacting the product of step a) with a disiloxane with the general formula 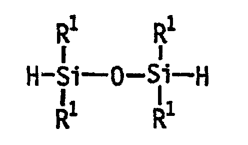 whereby R¹ is independently selected from C₁ to C₁₀ alkyl or aryl under acidic conditions.

9. The process of claim 8 further comprising a step c) wherein the product of step b) is used as SiH-functional polysiloxane for reacting with an alkenyl-functional alkoxysilane as defined for step a).

10. The process of claim 9 whereby steps b) and c) are conducted in alternating sequence whereby if the last step in the process is step c) a carbosiloxane dendrimer whose branch terminals are endblocked by alkoxy is obtained and if the last step in the process is step b) a carbosiloxane dendrimer whose branch terminal are endblocked by Si-H is obtained.

11. A curable composition comprising a carbosiloxane dendrimer according to any of claims 1-7 as crosslinking agent.

## Patentansprüche

1. Carbosiloxandendrimer, das mindestens eine Siloxaneinheit der allgemeinen Formel
X¹R¹ ₐSiO_{(3-a)/2}
enthält, worin R¹ unabhängig ausgewählt ist aus C₁- bis C₁₀-Alkyl oder Aryl, a eine ganze Zahl von 0 bis 2 ist und X¹ eine Silylalkylgruppe der folgenden Formel bei i = 1 ist: 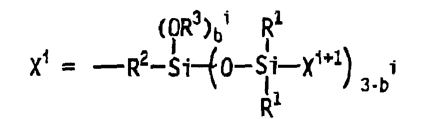 worin R¹ unabhängig aus C₁- bis C₁₀-Alkyl oder Aryl ausgewählt ist, R² C₂- bis C₁₀-Alkylen ist, R³ unabhängig aus C₁- bis C₁₀-Alkyl ausgewählt ist, Xⁱ⁺¹ das Wasserstoffatom oder die oben beschriebene Silylalkylgruppe bei i = i+1 ist, i eine ganze Zahl mit einem Wert von 1 bis 10 ist, die die Generation der besagten Silylalkylgruppe beschreibt, und bⁱ eine ganze Zahl von 0 bis 3 mit der Bedingung ist, dass b¹ in mindestens einem X¹ in jedem Molekül eine ganze Zahl von 0 bis 2 ist, wobei, wenn mehr als eine Siloxaneinheit anwesend ist, die beschriebenen Siloxaneinhelten gleich oder unterschiedlich sein können.

2. Carbosiloxandendrimer nach Anspruch 1 mit der folgenden allgemeinen Formel: 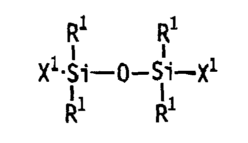 in der R¹ und X¹ wie in Anspruch 1 definiert sind.

3. Carbosiloxandendrimer nach Anspruch 1, enthaltend eine Polysiloxanstruktur als Kern, die mindestens 2 Siliciumatome enthält und mindestens eine der besagten Siloxaneinheiten.

4. Carbosiloxandendrimer nach Anspruch 1, das mindestens eine difunktionale Siloxaneinheit mit der allgemeinen Formel R¹₂SiO_{2/2} oder X¹R¹SiO_{2/2} in der Polysiloxanstruktur enthält, die den Kern enthält, worin R¹ und X¹ wie in Anspruch 1 definiert sind.

5. Carbosiloxandendrimer nach Anspruch 1, worin die Polysiloxanstruktur, die den Kern enthält, mindestens 5 Siliciumatome enthält und aus Siloxaneinheiten, ausgewählt aus den allgemeinen Formeln R¹SiO_{3/2}, X¹SiO_{3/2}, R¹₃SiO_{1/2} und X¹R¹₂SiO_{1/2}, worin R¹ und X¹ definiert sind wie in Anspruch 1, aufgebaut ist.

6. Carbosiloxandendrimer nach Anspruch 1, worin die Polysiloxanstruktur, die den Kern enthält, mindestens 6 Siliciumatome enthält und aus Siloxaneinheiten, ausgewählt aus den allgemeinen Formeln SiO_{4/2}, R¹₃SiO_{1/2} und X¹R¹₂SiO_{1/2}, worin R¹ und X¹ wie in Anspruch 1 definiert sind, aufgebaut ist.

7. Carbosiloxandendrimer nach einem der vorhergehenden Ansprüche, dessen Molekulargewicht, bestimmt auf Polystyrolbasis, einen Dispersitätsgrad von nicht größer 2 hat.

8. Verfahren zur Herstellung von Carbosiloxandendrimeren, umfassend
(a) Umsetzen eines Si-H-funktionellen Polysiloxans, das mindestens 2 Siliciumatome und mindestens eine Siloxaneinheit mit der allgemeinen Formel HR¹ₐSi_{(3-a)/2} enthält, worin besagte Siliciumatome zu besagter (besagten) Siloxaneinheit(en) gehören können oder separat sein können und R¹ unabhängig aus C₁- bis C₁₀-Alkyl oder Aryl ausgewählt wird und a eine ganze Zahl von 0 bis 2 ist, mit einem alkenylfunktionellen Alkoxysilan mit der allgemeinen Formel R⁴Si(OR³)₃, worin R³ unabhängig ausgewählt wird aus C₁- bis C₁₀-Alkyl und R⁴ aus C₂- bis C₁₀-Alkenyl ausgewählt wird, in Gegenwart eines Platin enthaltenden Katalysators;
(b) Umsetzen des Produkts aus Schritt (a) mit einem Disiloxan der allgemeinen Formel 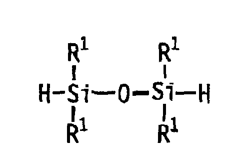
worin R¹ unabhängig ausgewählt wird aus C₁- bis C₁₀-Alkyl oder Aryl, unter sauren Bedingungen.

9. Verfahren nach Anspruch 8, zusätzlich umfassend einen Schritt (c), worin das Produkt aus Schritt (b) als Si-H-funktionelles Polysiloxan für die Reaktion mit einem alkenylfunktionellen Alkoxysilan, wie in Schritt (a) definiert, verwendet wird.

10. Verfahren nach Anspruch 9, worin die Schritte (b) und (c) in abwechselnder Reihenfolge durchgeführt werden, wobei, falls der letzte Schritt des Verfahrens Schritt (c) ist, ein Carbosiloxandendrimer, dessen Kettenenden mit Alkoxygruppen versehen sind, erhalten wird und, falls der letzte Schritt des Verfahrens Schritt (b) ist, ein Carbosiloxandendrimer, dessen Kettenenden mit Si-H versehen sind, erhalten wird.

11. Härtbare Zusammensetzung, enthaltend ein Carbosiloxandendrimer nach einem der Ansprüche 1 bis 7 als Vernetzungsmittel.

## Revendications

1. Dendrimère de carbosiloxane contenant au moins une unité siloxane de formule générale
X¹R¹ ₐSiO_{(3-a)/2}
dans laquelle les R¹ sont choisis indépendamment parmi des groupes alkyle ou aryle en C₁-C₁₀, a est un entier de 0 à 2, et X¹ est le groupe silylalkyle ayant la formule suivante pour i = 1 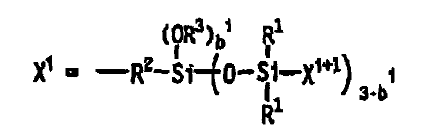 dans laquelle les R¹ sont choisis indépendamment parmi des groupes alkyle ou aryle en C₁-C₁₀, R² est un groupe alkylène en C₂-C₁₀, les R³ sont choisis indépendamment parmi des groupes alkyle en C₁-C₁₀, Xⁱ⁺¹ est un atome d'hydrogène ou le groupe silylalkyle défini ci-dessus pour i = i+1, i est un entier de 1 à 10 qui spécifie la génération dudit groupe silylalkyl, et bⁱ est un entier de 0 à 3, à condition que b¹ soit un entier de 0 à 2 dans au moins un X¹ de chaque molécule,
et dans laquelle, lorsqu'il y a plus d'une unité siloxane, les unités siloxane en question peuvent être identiques ou différentes.

2. Dendrimère de carbosiloxane selon la revendication 1, qui a la formule générale suivante: 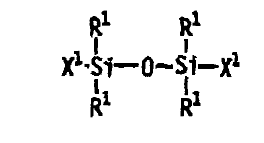 dans laquelle R¹ et X¹ ont la définition donnée dans la revendication 1.

3. Dendrimère de carbosiloxane selon la revendication 1, comprenant une structure de polysiloxane contenant au moins 2 atomes de silicium comme noyau et au moins l'une desdites unités siloxane.

4. Dendrimère de carbosiloxane selon la revendication 1, qui contient au moins une unité siloxane difonctionnelle de formule générale R¹₂SiO_{2/2} ou X¹R¹SiO_{2/2}, où R¹ et X¹ ont la définition donnée dans la revendication 1, dans la structure de polysiloxane comprenant le noyau.

5. Dendrimère de carbosiloxane selon la revendication 1, dans lequel la structure de polysiloxane comprenant le noyau contient au moins 5 atomes de silicium et est composée d'unités siloxane choisies parmi les formules générales R¹SiO_{3/2}, X¹SiO_{3/2}, R¹₃SiO_{1/2} et X¹R¹₂SiO_{1/2}, dans lesquelles R¹ et X¹ ont la définition donnée dans la revendication 1.

6. Dendrimère de carbosiloxane selon la revendication 1, dans lequel la structure de polysiloxane comprenant le noyau contient au moins 6 atomes de silicium et est composée d'unités siloxane choisies parmi les formules générales SiO_{4/2}, R¹₃SiO_{1/2} et X¹R¹₂SiO_{1/2}, dans lesquelles R¹ et X¹ ont la définition donnée dans la revendication 1.

7. Dendrimère de carbosiloxane selon l'une quelconque des revendications précédentes, dont la masse molaire, déterminée par rapport au polystyrène, a un indice de dispersité inférieur ou égal à 2.

8. Procédé de préparation de dendrimères de carbosiloxane comprenant
a) la réaction d'un polysiloxane à fonctions Si-H, qui contient au moins 2 atomes de silicium et au moins une unité siloxane de formule générale HR¹ₐSi_{(3-a)/2}, lesdits atomes de silicium pouvant appartenir à ladite ou auxdites unités siloxane ou pouvant être séparés, et les R¹ sont choisis indépendamment parmi des groupes allyle ou aryle en C₁-C₁₀ et a est un entier de 0 à 2, avec un alcoxysilane à fonction alcényle de formule générale R⁴Si(OR³)₃, dans laquelle les R³ sont choisis indépendamment parmi des groupes alkyle en C₁-C₁₀ et R⁴ est choisi parmi des groupes alcényle en C₂-C₁₀, en présence d'un catalyseur contenant du platine;
b) la réaction dans des conditions acides du produit de l'étape a) avec un disiloxane de formule générale 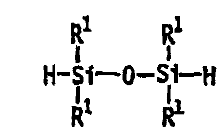
dans laquelle les R¹ sont choisis indépendamment parmi des groupes alkyle ou aryle en C₁-C₁₀.

9. Procédé selon la revendication 8, comprenant en outre une étape c) dans laquelle on utilise le produit de l'étape b) comme polysiloxane à fonctions Si-H pour une réaction avec un alcoxysilane à fonction alcényle de la manière définie pour l'étape a).

10. Procédé selon la revendication 9, dans lequel on effectue les étapes b) et c) dans une suite alternée grâce à quoi, si la dernière étape du procédé est une étape c), on obtient un dendrimère de carbosiloxane dont les extrémités des branches sont bloquées par un alcoxy, et, si la dernière étape du procédé est une étape b), on obtient un dendrimère de carbosiloxane dont les extrémités des branches sont bloquées par Si-H.

11. Composition durcissable comprenant un dendrimère de carbosiloxane selon l'une quelconque des revendications 1 à 7 comme agent réticulant.
